# EUROPEAN PATENT SPECIFICATION

(11) **EP 4 113 123 B1**
(45) Date of publication and mention of the grant of the patent: **18.06.2025**
(21) Application number: 21761845.3
(22) Date of filing: 05.02.2021
(51) Int. Cl.: G01N 35/00

(54) **AUTOMATIC ANALYSIS DEVICE**
AUTOMATISCHE ANALYSEVORRICHTUNG
DISPOSITIF D'ANALYSE AUTOMATIQUE

(30) Priority: 26.02.2020 JP 2020031024
(43) Date of publication of application: 04.01.2023
(73) Proprietor: Hitachi High-Tech Corporation, Minato-ku Tokyo 105-6409 (JP)
(72) Inventor: KANAI, Kumiko, Tokyo 105-6409 (JP); INOUE, Yoko, Tokyo 105-6409 (JP); SAGAWA, Shotaro, Tokyo 105-6409 (JP); MINEMURA, Yusuke, Tokyo 105-6409 (JP); SUZUKI, Yoichiro, Tokyo 105-6409 (JP)
(74) Representative: Strehl & Partner mbB
(86) International application number: PCT/JP2021/004429
(87) International publication number: WO 2021/171975

(56) References cited:
- EP-A1- 4 177 609
- JP-A- 2011 149 905
- JP-A- 2013 134 141
- JP-A- 2013 134 141
- JP-A- 2017 072 505
- JP-A- 2018 054 292
- JP-A- H01 057 173
- JP-B2- 6 446 451
- JP-U- S5 874 161
- KR-A- 20080 099 032

## Description

### Technical Field

The present invention relates to an automatic analyzer that performs qualitative and quantitative analysis on samples such as blood and urine.

### Background Art

As an example of an automatic analyzer having a constant-temperature apparatus that prevents the propagation of fungi generated in a constant-temperature medium without adversely affecting metal used for a circulation path of the constant-temperature medium and can improve the contamination, clogging, and optical characteristics of the circulation path, Japanese Literature 1 describes that a test tube for storing a sample is provided in a constant-temperature tank, a constant-temperature apparatus keeps the temperature of the sample constant by circulating the constant-temperature medium via a heating unit, and an ultraviolet lamp is constituted by a member that causes ultraviolet light to be transmitted through a part of the circulation path in the heading unit, and irradiates the constant-temperature medium with ultraviolet light through the member.

### Citation List

### Patent Literature

Patent Literature 1: Japanese Unexamined Patent Application Publication NO. S62-28668 JP 2013 134141 A discloses an automatic analyzer with the features in the preamble of present claim 1. Another conventional analyzer is described in JP 2018 054292 A and a sampling system is shown in KR 10 2008 0099032 A.

### Summary of Invention

### Technical Problems

An automatic analyzer that analyzes a specific component in a biological sample such as blood or urine is an apparatus that uses a reagent, which reacts with the specific component to change optical characteristics, or a reagent, which has an index that specifically reacts with the specific component, to measure a change in optical characteristics of a reaction solution of the specimen and the reagent, or counts the number of indices to perform qualitative and quantitative analysis.

This automatic analyzer generally includes a specimen supply unit in which reaction containers are arrayed on a circular rotary table and that includes a specimen container, a specimen transport mechanism, and a specimen dispensing mechanism in the vicinity of the rotary table, a reagent supply unit including a reagent cold storage unit, a reagent dispensing mechanism, and a reagent container automatic transport mechanism, a stirring mechanism that makes reaction between a specimen and a reagent uniform, a cleaning mechanism that cleans the reaction container after the reaction, an optical system mechanism that includes a light source unit and a light receiver that perform spectroscopic measurement, a control system that controls operations of each device within the apparatus, and the like, and operations are managed by software.

In recent circumstances surrounding automatic analyzers, the pursuit of higher speed, miniaturization, price reduction, and functions as an automatic machine is reaching a plateau. Therefore, functions and mechanisms for automatically loading specimens and exchanging reagent containers are beginning to be incorporated. In addition, emphasis is placed on further reducing operator work and reducing maintenance.

In the automatic analyzer, it is desired to keep a reaction container for causing a sample and a reagent to react with each other at 37°C, which is the same as the body temperature of the human body, so that the reaction is stabilized. Therefore, the reaction container is immersed in a constant-temperature tank filled with constant-temperature water. The constant-temperature water flows in a circulation flow path so as to be maintained at a constant temperature and passes through a cooling portion and a heating portion so that the temperature is controlled.

The temperature around 37°C is also a very suitable temperature for the propagation of germs. Excessive propagation of germs causes slime on the side of a part. When the slime accumulates, it turns into an aggregate (biofilm). This aggregate may separate from the surface of the part. When the separated aggregate passes through an optical axis, the aggregate may adversely affect analytical data.

Therefore, it is necessary to remove the slime before this aggregate is formed and always keep the inside of the circulation flow path clean. For this, physical cleaning is the most effective way. It is a major issue not to perform this cleaning or to reduce its frequency in aiming for reducing maintenance.

In addition, in order to prevent slime, in addition to cleaning the constant-temperature tank, regular replacement of constant-temperature water and addition of a chemical to prevent the propagation of germs are carried out. However, with only these methods, there is a limit to the suppression of germs in the circulation flow path for a long period of time.

On the other hand, as described in Patent Literature 1, a method of preventing the propagation of fungi generated in a constant-temperature medium, and improving the contamination, clogging, and optical characteristics of the circulation path has been considered.

However, in the technique described in Patent Literature 1, although bacteria flowing in the circulation flow path can be sterilized by ultraviolet light, there is a problem that bacteria that became a biofilm in the reaction tank and remained in the reaction tank could not be sterilized.

In addition, it has become clear that there is a problem that when a power supply of the apparatus is off, ultraviolet light is not emitted, and fungi propagate in the circulation flow path for the constant-temperature medium and in the reaction tank during a state in which the power supply is off. Therefore, even in the automatic analyzer described in Patent Literature 1, replacing the constant-temperature medium and cleaning the inside of the reaction tank need to be performed regularly, which is time-consuming and burdensome for the operator.

The present invention provides an automatic analyzer that suppresses the propagation of fungi in a circulation flow path for a liquid such as a constant-temperature medium to reduce the frequency of exchanging liquids and the frequency of work of cleaning the inside of a reaction tank and reduce a time period for maintenance work performed by an operator, compared with conventional techniques.

### Solution to Problems

The scope of the present invention is defined in claim 1.

The dependent claims relate to preferred embodiments.

### Advantageous Effects of Invention

According to the present invention, it is possible to suppress the propagation of fungi in a circulation flow path for a liquid to reduce the frequency of exchanging liquids and the frequency of work of cleaning the inside of a reaction tank, compared with conventional techniques. Problems, configurations, and effects other than those described above will be clarified by the description of the following embodiments.

### BRIEF DESCRIPTION OF THE DRAWINGS

FIG. 1 is a schematic diagram illustrating an entire configuration of an automatic analyzer according to a first embodiment of the invention.
FIG. 2 is a flowchart indicating the flow of operations of a circulation pump of the automatic analyzer according to the first embodiment.
FIG. 3 is a diagram schematically illustrating an entire configuration of an automatic analyzer according to a second embodiment of the invention.
FIG. 4 is a flowchart illustrating the flow of operations of a temperature adjusting mechanism of the automatic analyzer according to the second embodiment.
FIG. 5 is a diagram schematically illustrating an entire configuration of an automatic analyzer according to a third embodiment of the invention.
FIG. 6 is a diagram schematically illustrating an entire configuration of an automatic analyzer according to a fourth embodiment of the invention.
FIG. 7 is a diagram schematically illustrating details of a stop controller of the automatic analyzer according to the fourth embodiment and a liquid sterilizer of the automatic analyzer according to the fourth embodiment together with a peripheral configuration.
FIG. 8 is a diagram schematically illustrating an entire configuration of an automatic analyzer according to a fifth embodiment of the invention.
FIG. 9 is a diagram illustrating an example of a screen displayed on a display unit when a light amount of an ultraviolet light source is lower than a defined value in the automatic analyzer according to the fifth embodiment.
FIG. 10 is a diagram illustrating another example of the screen displayed on the display unit when the light amount of the ultraviolet light source is lower than the defined value in the automatic analyzer according to the fifth embodiment.
FIG. 11 is a diagram illustrating an example of a screen displayed on the display unit when an abnormal liquid amount is detected in the automatic analyzer according to the fifth embodiment.
FIG. 12 is a diagram schematically illustrating an entire configuration of an automatic analyzer according to a sixth embodiment of the invention.
FIG. 13 is a diagram schematically illustrating an entire configuration of an automatic analyzer according to a seventh embodiment of the invention.
FIG. 14 is a diagram schematically illustrating an entire configuration of an automatic analyzer according to an eighth embodiment of the invention.
FIG. 15 is a diagram schematically illustrating details of a reaction tank of an automatic analyzer according to a first embodiment.

### Description of Embodiments

Embodiments of an automatic analyzer according to the present invention are described below with reference to the drawings.

### <First Embodiment>

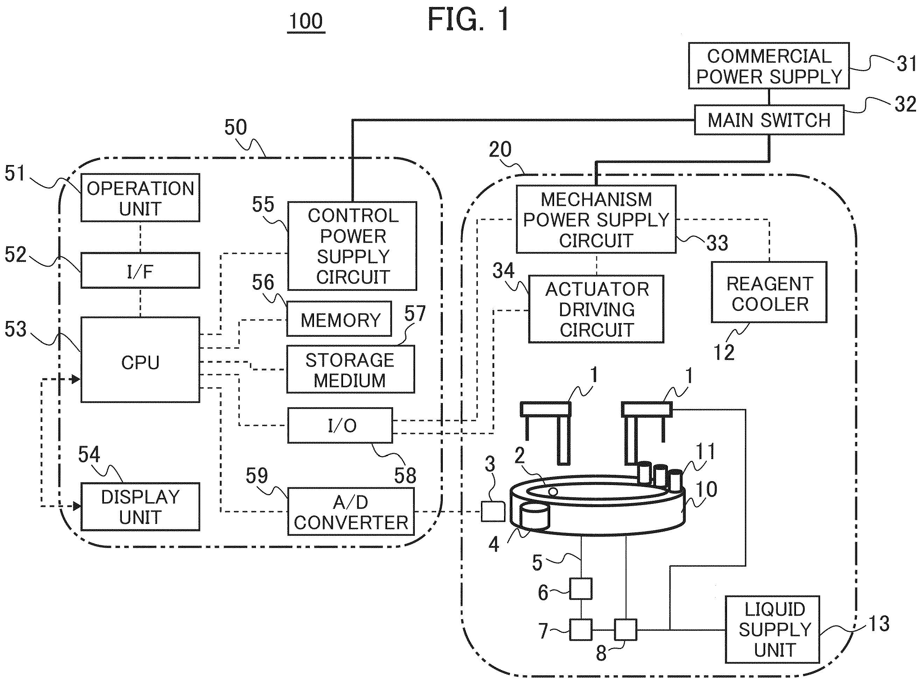

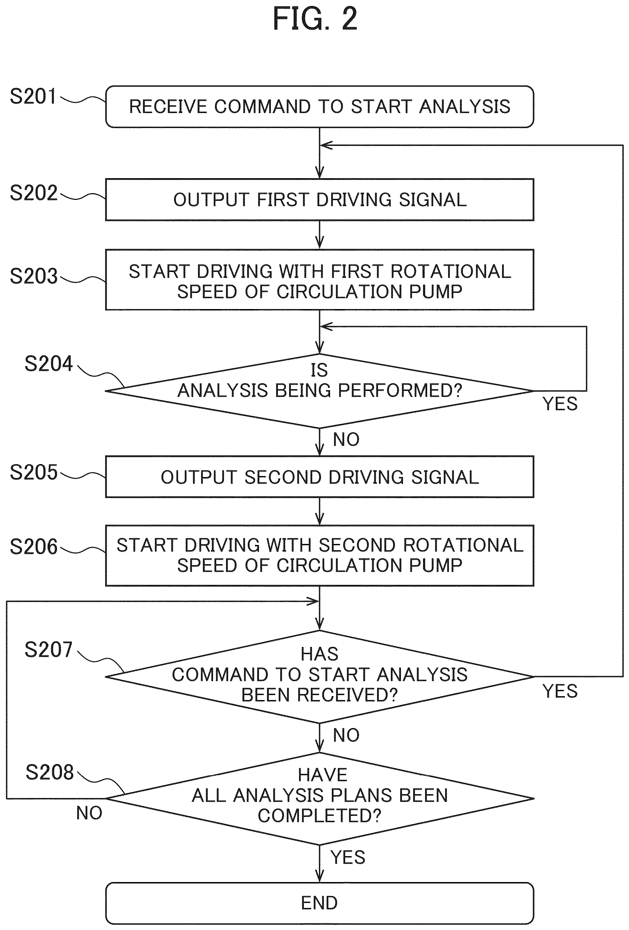

A first embodiment of the automatic analyzer according to the present invention is described with reference to FIGS. 1 and 2.

First, an entire configuration of an automatic analyzer is described with reference to FIG. 1. FIG. 1 is a diagram schematically illustrating the entire configuration of the automatic analyzer according to the first embodiment.

The automatic analyzer 100 illustrated in FIG. 1 is an apparatus that is configured to analyze a specimen and mainly includes a main switch 32, an analyzer 20 that analyzes the specimen, and an analysis controller 50 that controls an operation of the automatic analyzer 100.

The main switch 32 supplies power from a commercial power supply 31 to a control power supply circuit 55 within the analysis controller 50 and a mechanism power supply circuit 33 within the analyzer 20. In addition, the main switch 32 has a function as a breaker that blocks supply of power to the entire automatic analyzer 100 when electric leakage, overcurrent, or the like occurs on the commercial power supply 31 side.

The analyzer 20 mainly includes a dispensing mechanism 1, reaction containers 11, a reagent cooler 12, a stirring mechanism 4, a light source 2, a photometer 3, a reaction tank 10, a flow path 5, a temperature sensor 6, a temperature adjusting mechanism 7, a circulation pump 8, a liquid supply unit 13, the mechanism power supply circuit 33, an actuator driving circuit 34, and the like.

The dispensing mechanism 1 is a device that dispenses a specimen from a specimen container (not illustrated) into the reaction containers 11 and dispenses a reagent from a reagent container (not illustrated) into the reaction containers 11. The reaction containers 11 are containers that hold a reaction solution obtained by causing the sample dispensed by the dispensing mechanism 1 to react with the reagent dispensed by the dispensing mechanism 1. The plurality of reaction containers 11 are provided in the apparatus. The stirring mechanism 4 is a device that stirs the reaction solution held in the reaction containers 11.

The reagent cooler 12 is a device that cools and stores the reagent container storing the reagent to be used for analysis and includes a cold storage power supply circuit. Power is supplied from the commercial power supply 31 to the reagent cooler 12 via the main switch 32. Therefore, even in a stopped state, the degradation of the reagent is suppressed by storing the reagent at a low temperature.

The light source 2 is a device that emits light to the reaction solution held in the reaction containers 11 for qualitative and quantitative analysis. The photometer 3 is a mechanism that measures optical characteristics of the reaction solution. For example, the photometer 3 is a device that detects the amount of light emitted from the light source 2 and transmitted through the reaction solution. The result of the detection by the photometer 3 is output to an A/D converter 59 of the analysis controller 50.

The reaction tank 10 is a mechanism that keeps the temperatures of the plurality of reaction containers 11 constant. The inside of the reaction tank 10 is filled with a constant-temperature medium supplied from a circulation flow path.

The flow path 5 is provided to manage the temperature of the constant-temperature medium within the reaction tank 10 and includes the temperature sensor 6, the temperature adjusting mechanism 7, and the circulation pump 8. The liquid supply unit 13 is connected to the flow path 5.

The temperature sensor 6 is a thermometer that is present in the reaction tank 10 and detects the temperature of the constant-temperature medium flowing in the flow path 5.

The temperature adjusting mechanism 7 is a device constituted by a heater and a cooler that adjust the temperature of the constant-temperature medium within the flow path 5.

The circulation pump 8 is a pump that circulates the constant-temperature medium within the reaction tank 10 and the flow path 5.

The reaction tank 10, the flow path 5, the temperature sensor 6, the temperature adjusting mechanism 7, and the circulation pump 8 constitute an analyzer circulation system that circulates the liquid present in the analyzer 20.

It is possible to change the order of the temperature sensor 6, the temperature adjusting mechanism 7, and the circulation pump 8 as appropriate.

In addition, although the case where the temperature sensor 6 is provided in the flow path 5 within the circulation path in FIG. 1 is described, the temperature sensor 6 can be provided at a position other than the position illustrated in FIG. 1. It is sufficient if the temperature sensor 6 is located at a position where the temperature sensor 6 can measure the temperature of the constant-temperature medium. For example, the temperature sensor 6 may be located in the reaction tank 10. The temperature sensor 6 can be located outside the circulation path.

The liquid supply unit 13 is a mechanism that stores the liquid to be used by the analyzer 20 and supplies the constant-temperature medium from upstream to each device within the analyzer 20, for example, to the dispensing mechanism 1 and is constituted by a liquid tank or the like. The temperature of the liquid in the liquid supply unit 13 is basically not managed.

To suppress the retention of the liquid in the liquid supply unit 13, a configuration for circulating the liquid in the liquid supply unit 13 is desirable. This configuration constitutes a supply unit circulation system. In addition, the liquid supply unit 13 may have a function of temporarily storing the constant-temperature medium.

The mechanism power supply circuit 33 is a device that supplies power from the commercial power supply 31 via the main switch 32 to each of mechanisms of the analyzer 20.

The actuator driving circuit 34 is provided for each of the mechanisms constituting the analyzer 20 and drives each of the mechanisms based on a command from a CPU 53 via an input/output port 58.

The analysis controller 50 transmits a control signal to the mechanism power supply circuit 33 and the actuator driving circuit 34 included in the analyzer 20 and connected via the input/output port 58. In addition, the analysis controller 50 receives, via the A/D converter 59, a signal detected by the photometer 3 at the time of the measurement of the reaction solution and performs necessary calculation to perform an analysis operation.

The analysis controller 50 includes an operation unit 51, an interface 52, the CPU (central processing unit) 53, a display unit 54, the control power supply circuit 55, a memory 56, a storage medium 57, the input/output port 58, the A/D converter 59, and the like.

The operation unit 51 is a mechanism that inputs a command signal to the CPU 53 via the interface 52 and is constituted by a keyboard or a mouse that is configured to input various types of data such as various parameters, settings, analysis request information, and a command to start analysis.

The CPU 53 is a mechanism that performs various types of arithmetic processing and controls operations of each device in the automatic analyzer 100 based on a computer program stored in the storage medium 57 described later.

The CPU 53 according to the present embodiment performs control to switch at least one of the flow rate of the liquid circulated by the analyzer circulation system and the flow rate of the liquid circulated by the supply unit circulation system between a first flow rate at normal time and a second flow rate different from the first flow rate. Details thereof are described later.

The "normal time" when the liquid is circulated at the first flow rate in the present embodiment means, for example, the time of the execution of the analysis operation.

The display unit 54 is a device that displays various types of information based on a display command from the CPU 53 and is constituted by a liquid crystal display or the like that displays information such as an input screen for various parameters and settings, analysis inspection data of initial inspection or reinspection, and measurement results. The display unit 54 can be a touch panel display device that also serves as the above-described operation unit 51.

The control power supply circuit 55 is a device that supplies power supplied from the commercial power supply 31 via the main switch 32 to each unit of the analysis controller 50.

The memory 56 is a device that temporarily stores various types of information.

The storage medium 57 is a recording device that has recorded therein results of measuring a specimen set in the automatic analyzer 100, analysis request information of a specimen stored in a specimen container placed in each specimen rack, and the like and is a semiconductor memory such as a flash memory, a magnetic disk such as an HDD (hard disk drive), or the like. The storage medium 57 also has recorded therein various control parameters and setting values of operations of each device in the automatic analyzer 100, various computer programs for performing various processes such as a display process.

The input/output port 58 is a device that relays information between the CPU 53, and the mechanism power supply circuit 33 and the actuator driving circuit 34 of the analyzer 20.

The A/D converter 59 is a device that converts a detection signal from the photometer 3 from an analog format to a digital format and transmits the signal to the CPU 53.

The above-described configuration is the entire configuration of the automatic analyzer 100.

The configuration of the automatic analyzer is not limited to the configuration for analyzing biochemical analytical items as illustrated in FIG. 1. The automatic analyzer can be an analyzer that performs analysis on other analytical items, such as an immunoassay apparatus that performs analysis on immunological analytical items. In addition, the biochemical analyzer is not limited to the configuration illustrated in FIG. 1 and can have a configuration obtained by appropriately adding various mechanisms or removing a mechanism, a configuration with another analyzer for measuring an electrolyte, a configuration in which the numbers of mechanisms illustrated in FIG. 1 are changed, or the like, for example.

In addition, the automatic analyzer is not limited to a single analysis module configuration as illustrated in FIG. 1 and can have a configuration in which two or more analysis modules capable of measuring various identical or different analytical items, or two or more preprocessing modules that performs a preprocess are connected by a transport device.

A process of analyzing a specimen by the automatic analyzer 100 described above is generally performed in the following order.

In accordance with an analytical parameter of an inspection item instructed for a single specimen, first, the dispensing mechanism 1 dispenses the specimen into the reaction container 11. Next, the dispensing mechanism 1 dispenses the reagent to be used for analysis from the reagent container of the reagent cooler 12 into the reagent container 11 with the specimen dispensed therein. Subsequently, the stirring mechanism 4 stirs a mixed liquid of the specimen and the reagent in the reaction container 11 to prepare a reaction solution.

After that, light emitted from the light source 2 is transmitted through the reaction container 11 storing the reaction solution, and the photometer 3 measures the luminous intensity of the transmitted light, for example. The luminous intensity measured by the photometer 3 is transmitted to the CPU 53 via the A/D converter 59 of the analysis controller 50.

The CPU 53 performs qualitative and quantitative analysis by performing arithmetic processing to calculate the concentration of a predetermined component within the specimen, causes the display unit 54 or the like to display the result of the qualitative and quantitative analysis, and stores the result of the qualitative and quantitative analysis to the storage medium 57.

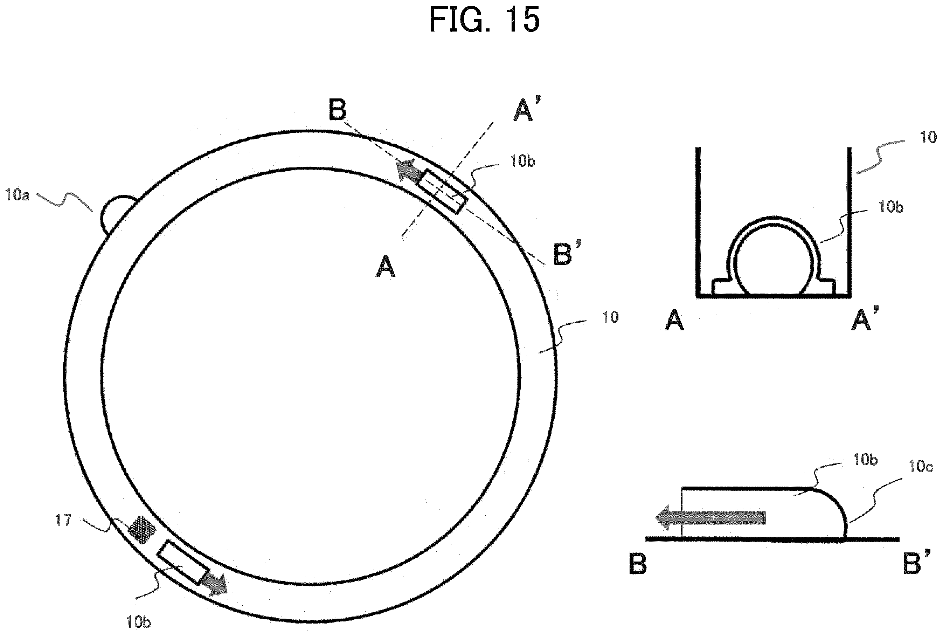

Next, control to change a flow rate of the circulating liquid such as the constant-temperature medium in the automatic analyzer 100 according to the present embodiment is described in detail with reference to FIGS. 2 and 15. FIG. 2 is a flow diagram illustrating the flow of an operation of the circulation pump. FIG. 15 is a diagram schematically illustrating details of the reaction tank.

In the automatic analyzer 100, during the execution of the above-described analysis operation, the reaction container 11 is maintained at a constant temperature by the constant-temperature medium stored in the reaction tank 10. This is due to the fact that it is necessary to cause the specimen to react with the reagent at a constant temperature in the reaction container 11.

The constant-temperature medium is introduced into the automatic analyzer 100 from the outside of the automatic analyzer 100 through the liquid supply unit 13. As the constant-temperature medium, water is used in many cases. This water is also used to clean each part such as the dispensing mechanism 1 in the automatic analyzer 100.

The constant-temperature medium is circulated in the reaction tank 10 and the circulation path (flow path 5) by the circulation pump 8 at a predetermined flow rate suitable to stabilize the temperature. It is assumed that the rotational speed of the circulation pump 8 in this case is a first rotational speed.

However, since a target object to be maintained at a constant temperature is not present in the reaction container 11 in a time period other than the time of the analysis operation, it is not necessary to circulate the constant-temperature medium at a flow rate equal to that at the time of the analysis operation. In addition, since the constant-temperature medium is not consumed when the constant-temperature medium is used for cleaning, it is not necessary to supply the constant-temperature medium and the constant-temperature medium does not flow in the liquid supply unit 13.

It is known that when cleaning is not periodically performed in the liquid supply unit 13 and the reaction tank 10, bacteria propagate and a biofilm is formed, for example, in a place where the flow rate is low or a place where the constant-temperature medium is stagnant, such as the wall surface of the reaction tank 10.

Details are described with reference to FIG. 15. The left of FIG. 15 is a diagram when the reaction tank 10 is viewed from a top surface and the right of FIG. 15 is a cross-sectional view of A-A' and a cross-sectional view of B-B'. The reaction tank 10 includes a recess 10a for adding a medical agent with antibacterial action or the like using the dispensing mechanism 1, a constant-temperature medium circulation port 10b for supplying the constant-temperature medium from the flow path 5 into the reaction tank 10, and an irregular portion such as a floating matter removal filter in the reaction tank 10. In such a place, since the flow rate easily becomes low and the constant-temperature medium easily becomes stagnant, a biofilm is easily formed unless cleaning is periodically performed. In addition, an example of a place where a biofilm is easily formed is a back surface 10c of the constant-temperature medium circulation port 10b. The constant-temperature medium is supplied into the reaction tank in an arrow direction illustrated from a substantially circular pipe illustrated in the cross-sectional diagram of A-A'. Although the flow rate of the medium in the arrow direction is relatively high, the flow rate at a root of the back surface 10 on the opposite side is relatively low since the back surface 10c becomes a resistance to the flow and the constant-temperature medium easily becomes stagnant. Even in such a place, a biofilm is easily formed unless cleaning is not periodically performed.

In the present embodiment, control to suppress the generation of a biofilm is performed by increasing or changing the flow rate of the constant-temperature medium or of the liquid at predetermined time intervals, periodically, or at any time intervals a plurality of times, compared with that at the time of the analysis operation, such that analysis after analysis work or the like is not interrupted.

For example, since it is possible to suppress the formation of a thick biofilm by increasing the flow rate, it is possible to prevent a biofilm from growing to a large biofilm that interrupts analysis at the time of crossing an optical path.

The control of the flow rate of the circulating constant-temperature medium or liquid is desirably performed not to prevent the analysis after the above-described analysis work or the like and is performed by the CPU 53 transmitting a control signal to control the rotational speed of the circulation pump 8 to the actuator driving circuit 34 via the input/output port 58. The control signal used in this case is referred to as a second control signal and the rotational speed of the circulation pump 8 used in this case is a second rotational speed.

The flow of the flow rate control is described below with reference to FIG. 2.

As illustrated in FIG. 2, first, when the CPU 53 receives, via the interface 52, an analysis start command input by an operation of the operation unit 51 by the operator (step S201), the CPU 53 outputs a first control signal to the actuator driving circuit 34 via the input/output port 58 (step S202).

The actuator driving circuit 34 drives the circulation pump 8 at the first rotational speed based on the first control signal (step S203). This circulates the constant-temperature medium in the reaction tank 10 and the flow path 5 at the first flow rate.

After that, the CPU 53 determines whether the apparatus is performing analysis (step S204). When it is determined that the apparatus is performing the analysis, the process returns to step S204. When it is determined that the apparatus is not performing the analysis, the process proceeds to step S205.

Next, the CPU 53 outputs the second control signal to the actuator driving circuit 34 via the input/output port 58 (step S205).

The actuator driving circuit 34 drives the circulation pump 8 at the second rotational speed based on the second control signal (step S206). This circulates the constant-temperature medium in the reaction tank 10 and the flow path 5 at the second flow rate.

It is desirable that control be performed to set the second flow rate to, for example, 1.2 to 2.5 times the first flow rate. When the flow rate is increased, a biofilm is hardly formed but the constant-temperature medium may overflow from the reaction tank 10. Therefore, the flow rate when the constant-temperature medium does not overflow from the reaction tank 10 is an upper limit. On the other hand, regarding a decrease in the flow rate, it is desirable that control be performed to set the second flow rate to be, for example, 0.2 to 0.8 times the first flow rate. When the flow rate is decreased, the flow changes due to a change in the flow rate without the suppression of the formation of a biofilm and the constant-temperature medium present in a place where the constant-temperature medium is stagnant can be efficiently replaced. Therefore, it can be expected to suppress the formation of a biofilm.

After that, the CPU 53 determines whether the CPU 53 has received an analysis start command from the operator (step S207). When it is determined that the command has been received, the process returns to step S202. When it is determined that the command has not been received, the process proceeds to step S208.

After that, the CPU 53 determines whether all analysis plans have been completed (step S208). When it is determined that all the analysis plans have been completed, the CPU 53 ends the process. When it is determined that not all the analysis plans have been completed, the process returns to step S207.

When the circulation flow path is provided in the liquid supply unit 13, control is performed to change the flow rate in a similar manner.

Next, effects of the present embodiment are described below.

The automatic analyzer 100 according to the above-described first embodiment of the present invention includes the analyzer 20 that analyzes a specimen, the supply unit that stores and supplies the liquid to be used by the analyzer 20, the analyzer circulation system that circulates the liquid present in the analyzer 20, the supply unit circulation system that circulates the liquid present in the supply unit, and the analysis controller 50 that controls the operation of the automatic analyzer 100. The analysis controller 50 switches at least one of the flow rate of the liquid circulated by the analyzer circulation system and the flow rate of the liquid circulated by the supply unit circulation system between the first flow rate at the normal time and the second flow rate different from the first flow rate.

Therefore, the flow occurs even in places where the constant-temperature medium or the liquid is stagnant in the liquid supply unit 13, the reaction tank 10, and the flow path 5 when the constant-temperature medium or the liquid is circulated at a constant flow rate, and the propagation of fungi that causes a biofilm is suppressed compared with conventional techniques. Therefore, it is possible to reduce the frequency of exchanging the liquid such as the constant-temperature medium and the frequency of work of cleaning the inside of the liquid supply unit 13, the inside of the reaction tank 10, and the inside of the flow path 5, compared with conventional apparatuses. Therefore, the automatic analyzer can reduce a time period required for the operator to perform maintenance work and reduce a load.

### <Second Embodiment>

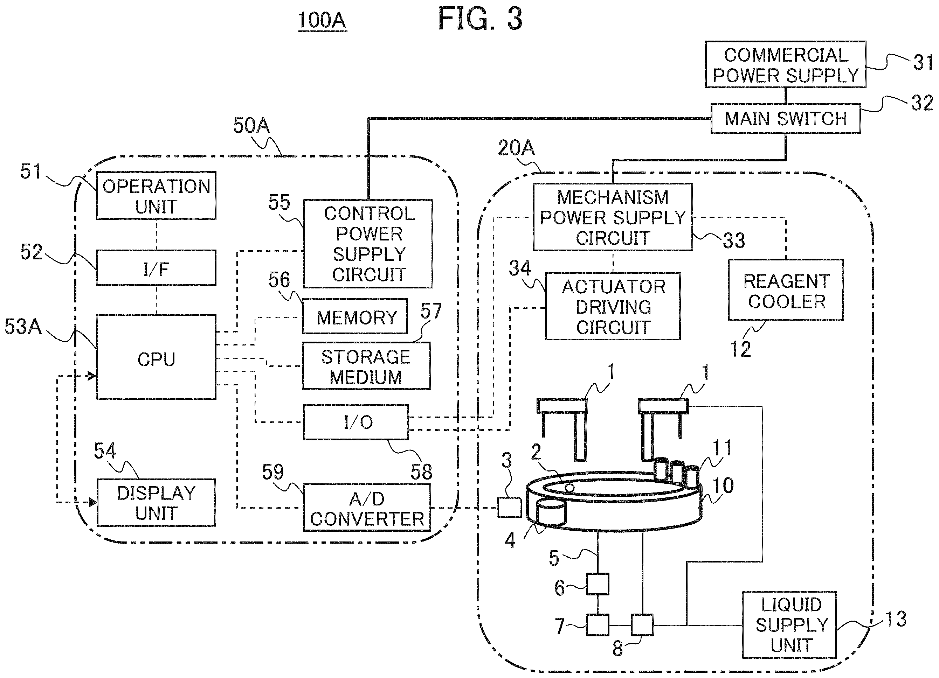

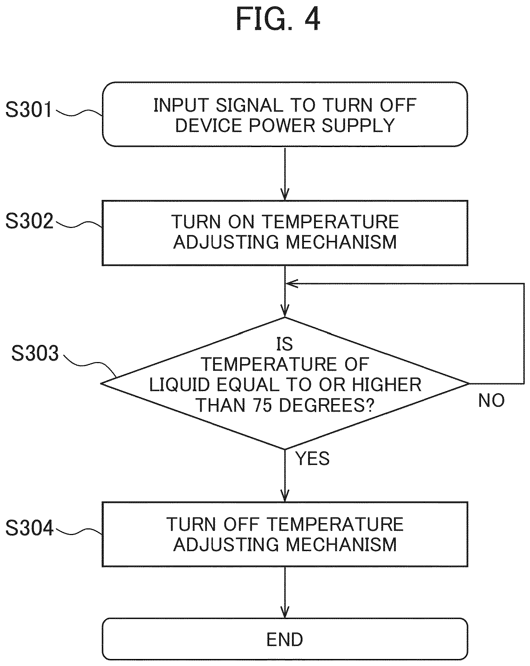

An automatic analyzer according to a second embodiment of the present invention is described with reference to FIGS. 3 and 4. FIG. 3 is a diagram schematically illustrating an entire configuration of the automatic analyzer according to the second embodiment. FIG. 4 is a flow diagram illustrating the flow of an operation of a temperature adjusting mechanism. The same configurations as those described in the first embodiment are denoted by the same reference signs and a description thereof is omitted. The same applies to the following embodiments.

The automatic analyzer 100A according to the present embodiment illustrated in FIG. 3 performs temperature adjustment such that a constant-temperature medium is at a defined temperature appropriate for analysis at the time of an analysis operation in a similar manner to the automatic analyzer 100 according to the first embodiment. In addition, a CPU 53A of an analysis controller 50A performs control to heat the liquid by the temperature adjusting mechanism 7 at least once when all analysis for the day is completed and a power supply of the apparatus is turned off, when the apparatus is activated, when analysis is not planned to be performed by an analyzer 20A for a certain time period or longer, and at a predetermined time interval such that the temperature of the liquid becomes higher than that at the time of normal temperature adjustment.

More specifically, when the CPU 53A receives, via the interface 52, a trigger signal to start heating control, such as a signal to turn off the power supply of the apparatus or a signal to turn on the power supply of the apparatus, based on an operation of the operation unit 51 by the operator, the CPU 53A outputs, to an actuator driving circuit 34 of the analyzer 20A via the input/output port 58, a heat signal to start heating by the temperature adjusting mechanism 7.

The CPU 53A constantly receives temperature information from the temperature sensor 6 via the input/output port 58, transmits a signal based on the information to the actuator driving circuit 34 for driving the temperature adjusting mechanism 7 via the input/output port 58 to heat the constant-temperature medium at a temperature higher than 37 degrees at the normal time, such as a temperature of 75 degrees or higher, thereby sterilizing bacteria in the constant-temperature medium. The heating temperature may not be 75 degrees or higher and can be set according to the configuration of the apparatus or a condition for the operation.

The flow of the heating control according to the present embodiment is described below with reference to FIG. 4. A case where the heading control is performed when the power supply of the apparatus is off is described with reference to FIG. 4.

As illustrated in FIG. 4, first, when the CPU 53A receives, via the interface 52, a command to turn off the power supply of the apparatus that has been input by an operation of the operation unit 51 by the operator (step S301), the CPU 53A outputs a temperature increase signal to the actuator driving circuit 34 via the input/output port 58 (step S302) and the actuator driving circuit 34 increases output of the heater of the temperature adjusting mechanism 7 based on the temperature increase signal.

After that, the CPU 53 determines whether the temperature of the constant-temperature medium detected by the temperature sensor 6 is equal to or higher than 75 degrees (step S303). When it is determined that the temperature is lower than 75 degrees, the process returns to step S303.

On the other hand, when it is determined that the temperature is equal to or higher than 75 degrees, the process proceeds to step S304. Next, the CPU 53 outputs a temperature increase completion signal to the actuator driving circuit 34 and the mechanism power supply circuit 33 via the input/output port 58 (step S304). The actuator driving circuit 34 ends the operation of the temperature adjusting mechanism 7 based on the input temperature increase completion signal after a certain time period, the mechanism power supply circuit 33 completes the supply of power to the temperature adjusting mechanism 7 after a certain time period based on the input temperature increase completion signal, and the process is completed.

Other configurations and operations are substantially the same as those of the automatic analyzer 100 according to the above-described first embodiment and a description thereof is omitted.

Even the automatic analyzer 100A according to the second embodiment of the present invention can obtain effects similar to those of the automatic analyzer 100 according to the above-described first embodiment.

In addition, the temperature adjusting mechanism 7 that adjusts the temperature of the liquid in the analyzer circulation system is further provided. Since the analysis controller 50A controls the temperature adjusting mechanism 7 to cause the temperature adjusting mechanism 7 to heat the liquid at a temperature higher than that at the time of the normal temperature adjustment at least once when the power supply of the apparatus is turned off, when the apparatus is activated, when analysis is not planned to be performed by the analyzer 20A for a certain time period or longer, and at a predetermined time interval so that it is possible to more efficiently reduce the number of fertile bacteria in the reaction tank 10 and thus further reduce a load on the operator.

The present embodiment is not limited to an embodiment in which the constant-temperature medium is heated. Control may be performed to cool the constant-temperature medium when analysis is not performed for a certain time period or before the power supply of the apparatus is turned off. The heating and the cooling may be performed.

### <Third Embodiment>

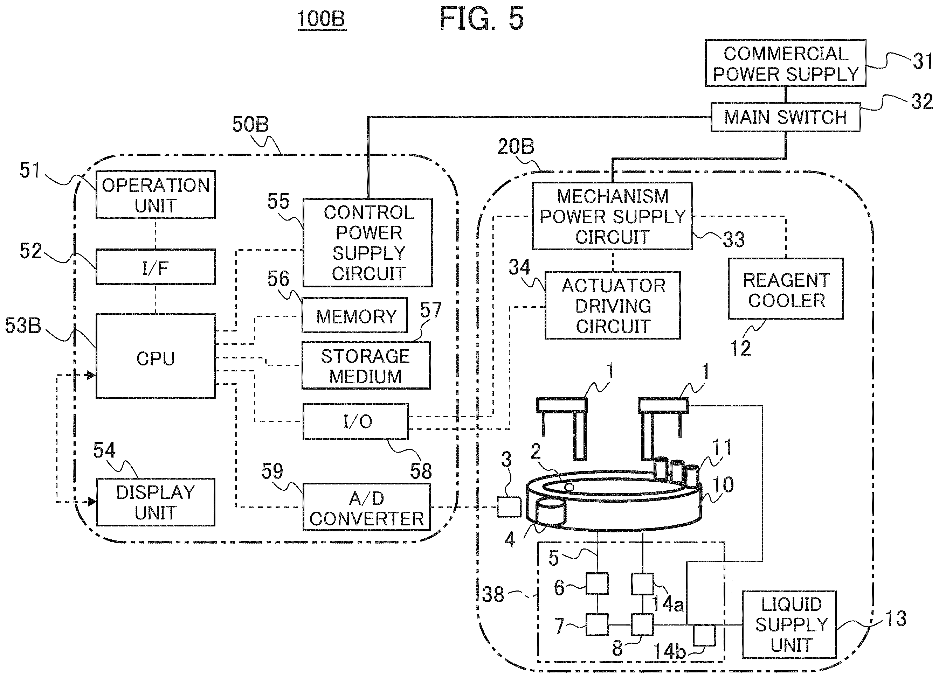

An automatic analyzer according to a third embodiment of the present invention is described with reference to FIG. 5. FIG. 5 is a diagram schematically illustrating an entire configuration of the automatic analyzer according to the third embodiment.

The automatic analyzer 100B according to the present embodiment illustrated in FIG. 5 has a configuration obtained by adding, to the automatic analyzer 100 according to the first embodiment or the automatic analyzer 100A according to the second embodiment, ultraviolet light sources 14a and 14b that irradiate a constant-temperature medium or a liquid in an analyzer 20B with ultraviolet light to sterilize the constant-temperature medium.

As long as the ultraviolet light source 14a can irradiate the circulating constant-temperature medium with ultraviolet light, the ultraviolet light source 14a may be located at any position outside the circulation path. For example, the ultraviolet light source 14a can be located at a position in the reaction tank 10 or the like.

In addition, the ultraviolet light source 14b is not limited to the configuration for irradiating the liquid supplied from the liquid supply unit 13 toward each mechanism in the analyzer 20B with ultraviolet light. The ultraviolet light 14b can be configured to irradiate the liquid in the liquid supply unit 13 with ultraviolet light or irradiate the liquid constituting the circulation system for the supply unit with ultraviolet light.

In addition, the order of the temperature sensor 6, the temperature adjusting mechanism 7, the circulation pump 8, and the ultraviolet light sources 14a and 14b that are illustrated in FIG. 5 is not limited to that illustrated in FIG. 5 and can be changed.

In the automatic analyzer 100B according to the present embodiment, a CPU 53B of an analysis controller 50B is configured to turn on the ultraviolet light sources 14a and 14b periodically at predetermined time intervals or at any time intervals a plurality of times. The CPU 53B can be configured to constantly turn on the ultraviolet light sources 14a and 14b.

For example, it is desirable that the ultraviolet light be emitted when analysis after analysis work or the like is not interrupted. In addition, when the circulation flow rate is not increased, the circulation flow rate of the constant-temperature medium can be reduced such that the sterilization efficiency of the ultraviolet light sources 14a and 14b is improved. Therefore, it is possible to increase a time period when the constant-temperature medium is present in irradiation ranges of the ultraviolet light sources 14a and 14b.

Other configurations and operations are substantially the same as those of the automatic analyzer 100 according to the above-described first embodiment or those of the automatic analyzer 100A according to the above-described second embodiment and a description thereof is omitted.

The automatic analyzer 100B according to the third embodiment of the present invention can obtain effects similar to those of the automatic analyzer 100 according to the above-described first embodiment and the like.

In addition, since the ultraviolet light sources 14a and 14b that irradiate the liquid with ultraviolet light are provided, it is possible to emit ultraviolet light with high bactericidal power and efficiently suppress the propagation of fungi. Therefore, it is possible to efficiently reduce the frequency of exchanging the liquid such as the constant-temperature medium and the frequency of work of cleaning the inside of the reaction tank 10.

Furthermore, the analysis controller 50B can turn on the ultraviolet light sources 14a and 14b periodically at predetermined time intervals or at any time intervals at a plurality of times to efficiently suppress the propagation of fungi, suppress wear of the ultraviolet light sources 14a and 14b as compared with a case where the analysis controller 50B constantly turns on the ultraviolet light sources 14a and 14b, and contribute to a further reduction in maintenance.

### <Fourth Embodiment>

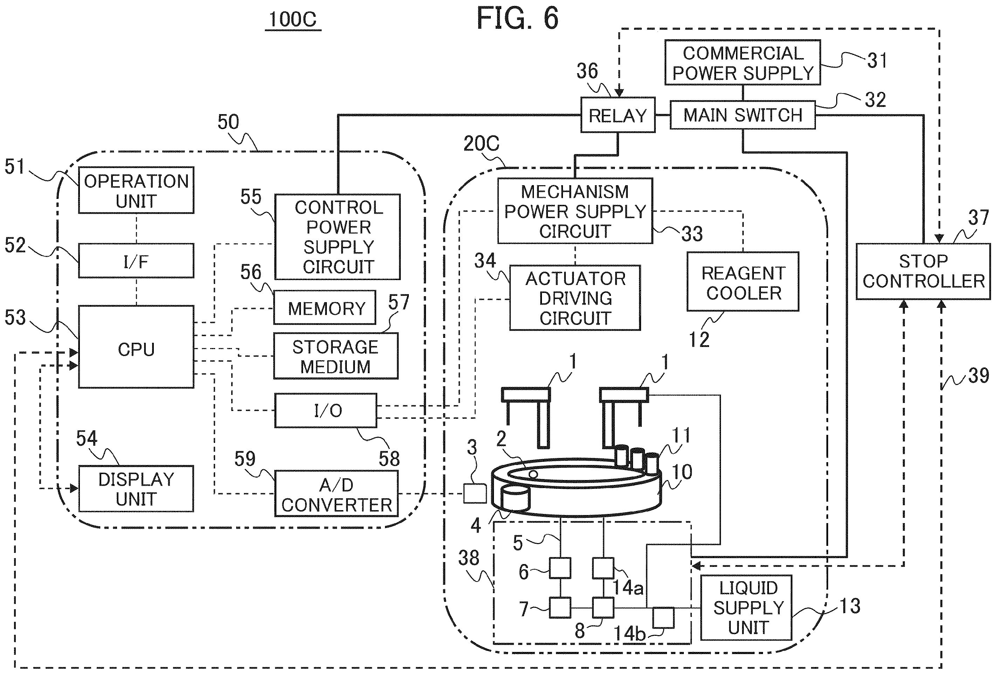

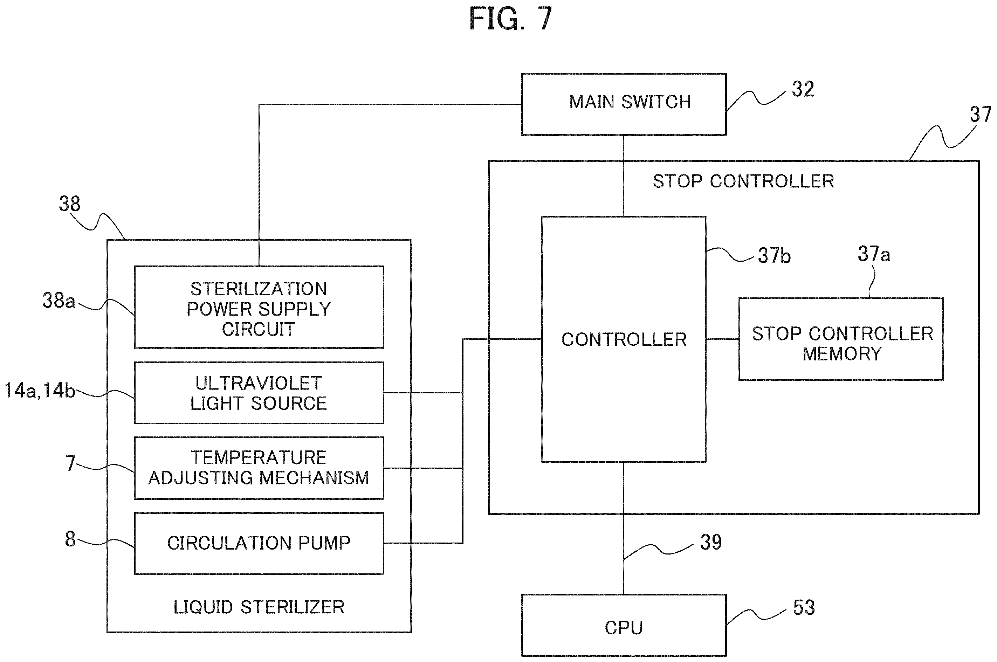

An automatic analyzer according to a fourth embodiment of the present invention is described with reference to FIGS. 6 and 7. FIG. 6 is a diagram schematically illustrating an entire configuration of the automatic analyzer according to the fourth embodiment. FIG. 7 is a diagram schematically illustrating details of a stop controller and a liquid sterilizer together with a peripheral configuration.

The automatic analyzer 100C according to the present embodiment illustrated in FIG. 6 includes a relay 36, the stop controller 37, the liquid sterilizer 38, and the like in addition to the automatic analyzer 100B according to the third embodiment.

In the automatic analyzer 100C according to the present embodiment illustrated in FIG. 6, power is supplied from the commercial power supply 31 to the mechanism power supply circuit 33 and the control power supply circuit 55 via the main switch 32 and the relay 36.

The main switch 32 has a function as a breaker that blocks the supply of power to the entire automatic analyzer when electric leakage, overcurrent, or the like occurs.

The relay 36 switches between the supply of power to the control power supply circuit 55 of the analysis controller 50 and the mechanism power supply circuit 33 of an analyzer 20C and the blocking of the supply of power to the control power supply circuit 55 of the analysis controller 50 and the mechanism power supply circuit 33 of an analyzer 20C. Control for the switching is performed based on a command from the stop controller 37.

As illustrated in FIG. 7, the stop controller 37 includes a stop controller memory 37a as a storage unit for storing various types of information, a controller 37b, a setting/abnormality information communication path 39 for transmission and reception of setting information and abnormality information to and from the CPU 53, and the like.

The controller 37b controls an operation of the stop controller 37 based on information from the stop controller memory 37a and information from the liquid sterilizer 38. Particularly, the controller 37b maintains a state in which power is supplied to the reagent cooler 12 and the ultraviolet light sources 14a and 14b of the liquid sterilizer 38, and performs control to switch between a stopped state in which the supply of power to the relay 36, that is, the supply of power to the analyzer 20C and the analysis controller 50 is blocked, and an activated state in which power is supplied to the analyzer 20C and the analysis controller 50.

The controller 37b can be implemented by reading programs into a computer including a CPU, a memory, an interface, and the like or into a field-programmable gate array (FPGA) and causing the computer or the FPGA to perform calculation. These programs are stored an internal recording medium in each configuration or an external recording medium (not illustrated) and read and executed by the CPU.

The liquid sterilizer 38 includes the circulation pump 8 for circulating the constant-temperature medium, the ultraviolet light sources 14a and 14b that sterilize the constant-temperature medium, and a sterilization power supply circuit 38a that supplies power supplied from the commercial power supply 31 via the main switch 32 to each of the units of the liquid sterilizer 38. Even in the stopped state, the power is supplied from the commercial power supply 31 via the main switch 32.

In the stopped state, the ultraviolet light sources 14a and 14b may be continuously turned on, may be turned on periodically at predetermined time intervals in accordance with a command of the controller 37b of the stop controller 37, or may be turned on at any time intervals a plurality of times in accordance with a command of the controller 37b of the controller 37.

In addition, the controller 37b of the stop controller 37 may use the circulation pump 8 of the liquid sterilizer 38 to cause the flow rate of the constant-temperature medium at the time of the analysis operation to be different from the flow rate of the constant-temperature medium at time other than the time of the analysis operation in either one or both of the stopped state and a state other than the time of the analysis operation in the activated state as described in the first embodiment.

Furthermore, as described in the second embodiment, the temperature adjusting mechanism 7 can perform heating control on the liquid or the constant-temperature medium.

Other configurations and operations are substantially the same as those of the automatic analyzer 100B according to the above-described third embodiment and a description thereof is omitted.

The automatic analyzer 100C according to the fourth embodiment of the present invention can obtain effects similar to those of the automatic analyzer 100B according to the above-described third embodiment.

In addition, the relay 36 that switches between the supply of power to the analyzer 20C and the analysis controller 50 and the blocking of the supply of power to the analyzer 20C and the analysis controller 50, and the stop controller 37 that maintains a state in which power is supplied to the ultraviolet light sources 14a and 14b and that switches between the stopped state in which the supply of power to the analyzer 20C and the analysis controller 50 is blocked and the activated state in which power is supplied to the analyzer 20C and the analysis controller 50 are further provided. Thus, even when the power supply of the automatic analyzer 100C is off, it is possible to irradiate the liquid within the liquid supply unit 13 and the like with ultraviolet light. Therefore, even when analysis is not performed for a long time period, it is possible to efficiently suppress the propagation of germs in the liquid and efficiently further reduce a load on the operator.

### <Fifth Embodiment>

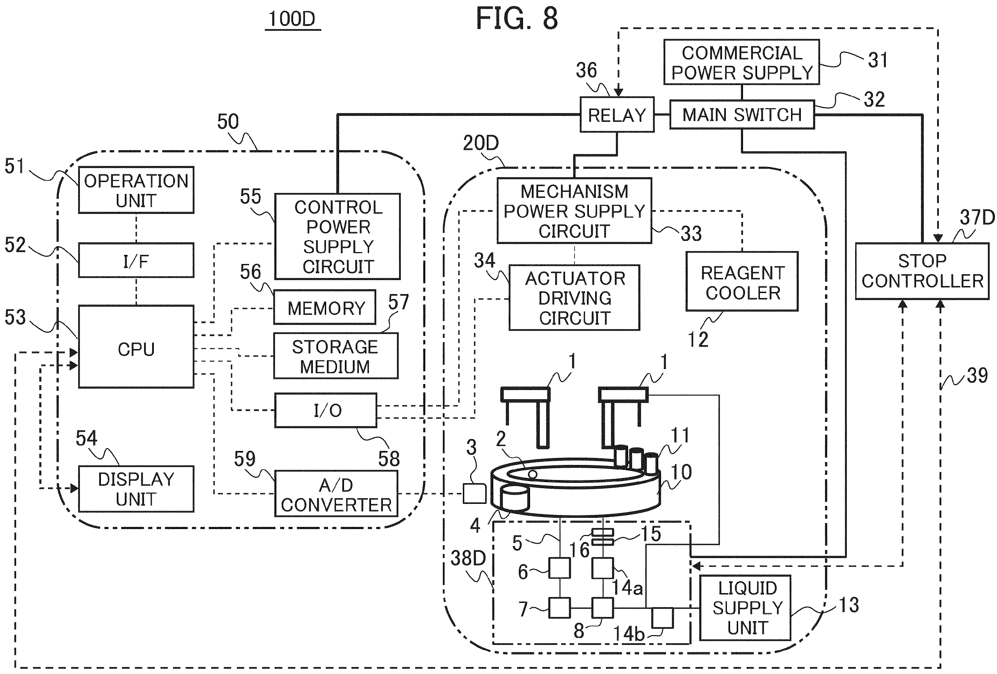

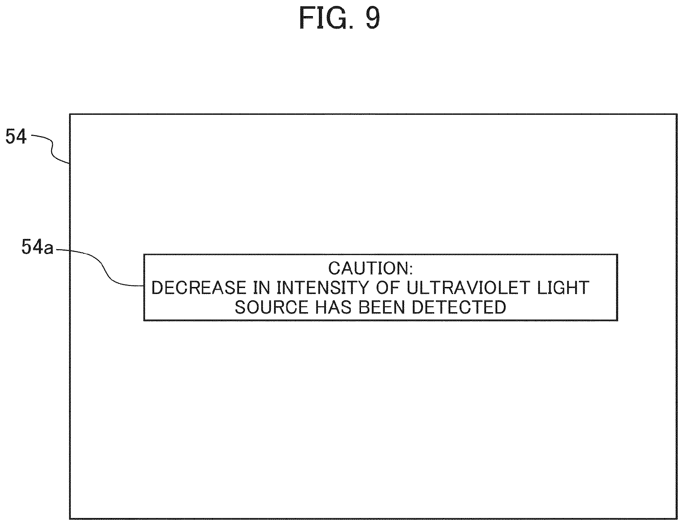

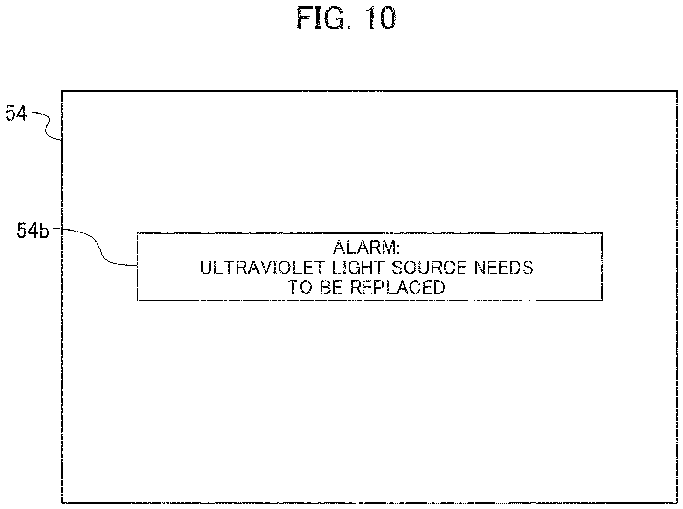

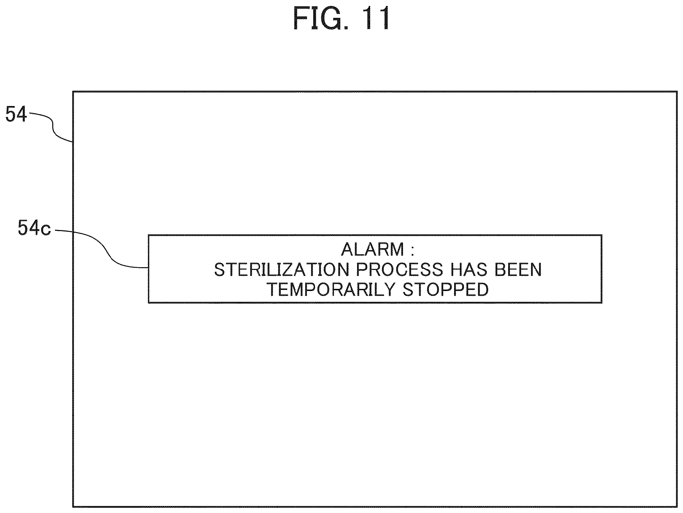

An automatic analyzer according to a fifth embodiment of the present invention is described with reference to FIGS. 8 to 11. FIG. 8 is a diagram schematically illustrating an entire configuration of the automatic analyzer according to the fifth embodiment. FIGS. 9 and 10 are diagrams illustrating examples of screens displayed on the display unit when amounts of light of the ultraviolet light sources become lower than a defined value. FIG. 11 is a diagram illustrating an example of a screen displayed on the display unit when an abnormal amount of the liquid is detected.

The automatic analyzer 100D according to the present embodiment illustrated in FIG. 8 includes, in a liquid sterilizer 38D of an analyzer 20D, a lighting detection sensor that detects an abnormality in the ultraviolet light sources 14a and 14b, and a liquid amount sensor that detects the amount of the constant-temperature medium in the reaction tank 10, in addition to the automatic analyzer 100C according to the fourth embodiment. The lighting detection sensor 15 needs to be located in a range in which ultraviolet light emitted from the ultraviolet light sources 14a and 14b reaches the lighting detection sensor 15. The liquid amount sensor 16 may be located in the reaction tank 10 or outside the reaction tank 10. The position of the liquid amount sensor 16 is not particularly limited as long as the liquid amount sensor 16 can detect the amount of the liquid.

In the automatic analyzer 100D according to the present embodiment, when it is determined that an abnormality occurs in the ultraviolet light sources 14a and 14b based on information of the lighting detection sensor 15, a stop controller 37D notifies the operator of the abnormality by a method in which information indicating that the abnormality has been detected is displayed on the display unit 54.

FIG. 9 illustrates the example of the screen displayed on the display unit 54 when amounts of light of the ultraviolet light sources 14a and 14b are smaller than an amount specified by the controller 37b. As illustrated in FIG. 9, "Caution: A decrease in the intensity of the ultraviolet light source has been detected." is displayed as alarm information 54a on the display unit 54.

In addition, FIG. 10 illustrates the example of the screen displayed on the display unit 54 when amounts of light of the ultraviolet light sources 14a and 14b become lower than the defined value. As illustrated in FIG. 10, "Alarm: The ultraviolet light source needs to be replaced." is displayed as alarm information 54b on the display unit 54. Therefore, the operator can easily recognize that the ultraviolet light sources 14a and 14b need to be replaced.

In addition, the stop controller 37D can block the supply of power to the ultraviolet light sources 14a and 14b based on information of the lighting detection sensor 15. For example, when the amounts of light of the ultraviolet light sources 14a and 14b become lower than the defined value, the stop controller 37 can transmit, to the mechanism power supply circuit 33, a signal to block the supply of power to the ultraviolet light sources 14a and 14b.

In addition, for example, even in a case where it is determined that an abnormality such as a failure of the ultraviolet light sources 14a and 14b is present based on information of the lighting detection sensor 15, the stop controller 37D can enable the apparatus when maintenance work is periodically carried out.

In addition, in the present embodiment, the liquid sterilizer 38D is incorporated in the temperature sensor 6 and power is supplied even in the stopped state.

In addition, the stop controller 37D can adjust the intensities of ultraviolet light emitted by the ultraviolet light sources 14a and 14b based on temperature information of the liquid measured by the temperature sensor 6 of the liquid sterilizer 38D. In addition, the stop controller 37D outputs, to the circulation pump 8 of the liquid sterilizer 38D, a command to control at least one of the flow rate of the liquid in the analyzer circulation system and the flow rate of the liquid in the supply unit circulation system as in the first embodiment. The stop controller 37D may control both of the flow rates or may control either one of the flow rates.

Furthermore, in the present embodiment, the temperature adjusting mechanism 7 is incorporated in the liquid sterilizer 38D and power is supplied even in the stopped state.

In addition, the stop controller 37D can cause the temperature adjusting mechanism 7 to heat the constant-temperature medium at a temperature of 75 degrees or higher to sterilize the constant-temperature medium. Alternatively, the stop controller 37D can cool the constant-temperature medium at a temperature of 5 degrees or lower to reduce the propagation speed of bacteria. Therefore, it is possible to set the temperature of the constant-temperature medium to a temperature unsuitable for the propagation of fungi and suppress the propagation of fungi in the constant-temperature medium.

In addition, in the present embodiment, when it is determined that the amount of the liquid detected by the liquid amount sensor 16 is abnormal in the stopped state or the like, the stop controller 37D can notifies the operator of the abnormality by displaying, on the display unit 54, information indicating that the fact that the amount of the constant-temperature medium is an abnormal value has been detected.

FIG. 11 illustrates the example of the screen displayed on the display unit 54 when an abnormal amount of the constant-temperature medium is detected. As illustrated in FIG. 11, "Alarm: The sterilization process has been temporarily stopped." is displayed as alarm information 54c on the display unit 54.

In addition, instead of or in addition to the notification of the abnormality to the operator, the stop controller 37D can output, to the sterilization power supply circuit 38a of the liquid sterilizer 38D, a command signal to block the supply of power to each of the units of the liquid sterilizer 38D, such as the ultraviolet light sources 14a and 14b.

Furthermore, instead of or in addition to the notification of the abnormality to the operator and the blocking of the supply of power to each of the units of the liquid sterilizer 38D, the stop controller 37D can increase or reduce the amount of the liquid from the liquid supply unit 13. In this case, it is desirable that the liquid supply unit 13 be able to reduce the constant-temperature medium in amount.

When the supply of power to the liquid sterilizer 38 is blocked, the constant-temperature medium is not sterilized and thus it is necessary to carry out maintenance work such as cleaning of the reaction tank 10 and exchange of the constant-temperature medium at the time of the activation of the apparatus.

In the present embodiment, when the controller 37b determines that the amount of the constant-temperature medium deviates from a defined normal value based on information of the liquid amount sensor 16, the liquid supply unit 13 can increase or reduce the constant-temperature medium in amount.

Other configurations and operations are substantially the same as those of the automatic analyzer 100C according to the above-described fourth embodiment and a description thereof is omitted.

The automatic analyzer 100D according to the fifth embodiment of the present invention can obtain effects similar to those of the automatic analyzer 100C according to the above-described fourth embodiment.

In addition, since the lighting detection sensor 16 that detects an abnormality in the ultraviolet light sources 14a and 14b is further provided, it is possible to early detect an abnormality in the ultraviolet light sources 14a and 14b. It is also possible to suppress the occurrence of a situation in which sterilization by ultraviolet light is not performed, and it is possible to easily reduce maintenance.

Furthermore, by notifying the operator of an abnormality based on information of the lighting detection sensor 15, the operator can recognize a decrease in the sterilizing effects of the ultraviolet light sources 14a and 14b and recognize that it is almost time to replace the ultraviolet light sources 14a and 14b. Therefore, it is possible to reliably suppress the occurrence of a situation in which sterilization by ultraviolet light is not performed.

In addition, by blocking the supply of power to the ultraviolet light sources 14a and 14b based on information of the lighting detection sensor 15, it is possible to prevent power from being unnecessarily supplied to the ultraviolet light sources 14a and 14b in which an abnormality is likely to occur, and suppress the occurrence of a serious abnormality. Therefore, it is possible to prevent the number of portions requiring maintenance from increasing more than necessary, and similarly, it is possible to more easily reduce the maintenance work time.

Furthermore, since the liquid amount sensor 16 that detects the amount of the liquid in the analyzer circulation system or the amount of the liquid in the supply unit circulation system is provided, it is possible to determine whether or not the amount of the liquid or the constant-temperature medium in the apparatus is abnormal and it is possible to suppress the occurrence of a failure such as interruption of analysis due to an insufficient amount of the liquid.

In addition, by notifying the operator of the abnormality based on information of the liquid amount sensor 16, it is possible for the operator to recognize that work of sterilizing the constant-temperature medium has been interrupted and recognize that some handling is necessary. Furthermore, by blocking the supply of power to the ultraviolet light sources 14a and 14b or increasing or decreasing the liquid in amount, it is possible to maintain the amount of the constant-temperature medium at a certain level even in the stopped state and avoid maintenance work associated with the supply of power to the liquid sterilizer 38 since the supply of power to the liquid sterilizer 38 is not blocked.

Furthermore, the propagation rate of fungi depends on the temperature, and the temperature of the constant-temperature medium in the stopped state depends on the temperature of the environment in which the apparatus is installed. Therefore, by controlling at least any one of the intensities of ultraviolet light emitted by the ultraviolet light sources 14a and 14b, the flow rate of the liquid in the analyzer circulation system, and the flow rate of the liquid in the supply unit circulation system, it is possible to appropriately perform sterilization work based on the state of the apparatus and easily reduce a load on the operator.

### <Sixth Embodiment>

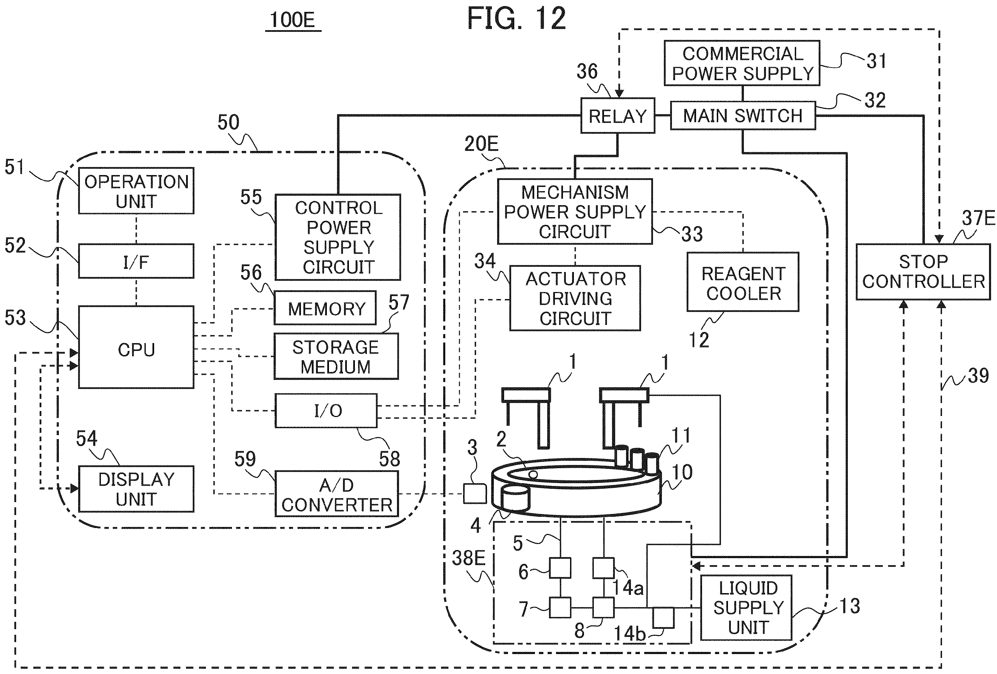

An automatic analyzer according to a sixth embodiment of the present invention is described with reference to FIG. 12. FIG. 12 is a diagram schematically illustrating an entire configuration of the automatic analyzer according to the sixth embodiment.

The configuration of the automatic analyzer 100E according to the present embodiment illustrated in FIG. 12 is substantially the same as that of the automatic analyzer 100C according to the fourth embodiment illustrated in FIG. 6. The automatic analyzer 100E turns on the ultraviolet light sources 14a and 14b periodically at predetermined time intervals or at any time intervals a plurality of times even in the stopped state of the apparatus.

A difference from the automatic analyzer 100C illustrated in FIG. 6 is that the automatic analyzer 100C uses the circulation pump 8 of the liquid sterilizer 38 to perform control to change the flow rate of the constant-temperature medium between the flow rate at the time of the analysis operation and the flow rate at time other than the time of the analysis operation, but the automatic analyzer 100E according to the present embodiment does not perform such flow rate control in a liquid sterilizer 38E of an analyzer 20E and the analysis controller 50. In addition, the temperature adjusting mechanism 7 does not perform control to heat the constant-temperature medium.

Other configurations and operations are substantially the same as those of the automatic analyzer 100C according to the above-described fourth embodiment and a description thereof is omitted.

In the sixth embodiment of the present invention, the automatic analyzer 100E includes a relay 36 that switches between the supply of power to the analyzer 20E and the analysis controller 50 and blocking of the supply of power to the analyzer 20E and the analysis controller 50, and a stop controller 37E that maintains a state in which power is supplied to the ultraviolet light sources 14a and 14b and that switches between the stopped state in which the supply of power to the analyzer 20E and the analysis controller 50 is blocked and an activated state in which power is supplied to the analyzer 20E and the analysis controller 50. According to the automatic analyzer 100E, it is possible to sterilize the constant-temperature medium by the ultraviolet light sources 14a and 14b not only in the activated state of the apparatus but also in the stopped state. Therefore, even in the stopped state, it is possible to efficiently suppress the propagation of bacteria in the reaction tank 10 and thus it is possible to obtain effects similar to the automatic analyzer 100 according to the above-described first embodiment.

### <Seventh Embodiment>

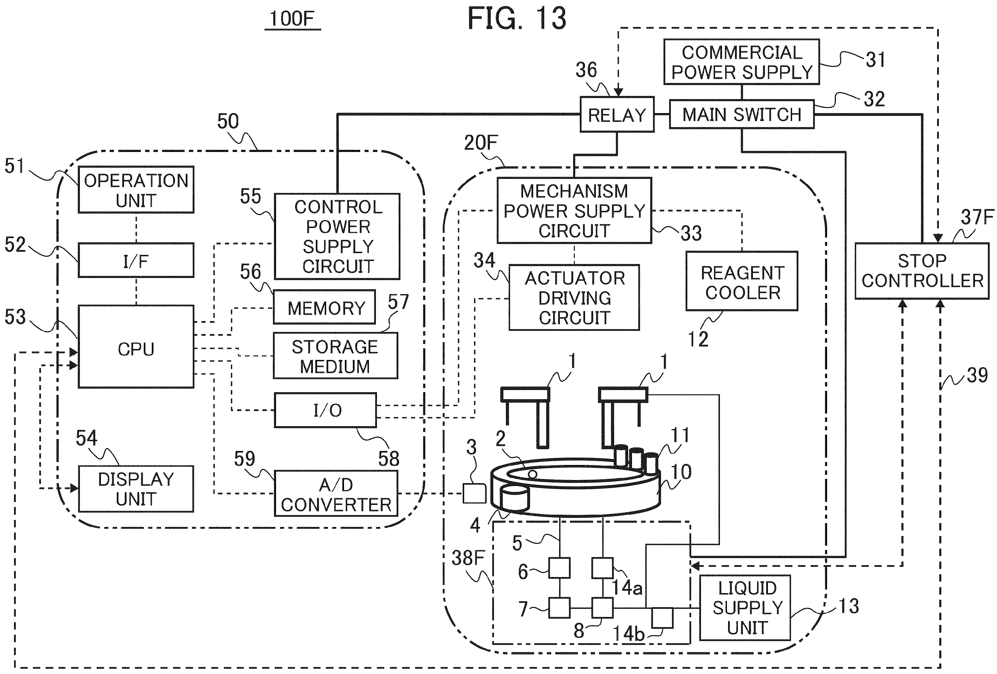

An automatic analyzer according to a seventh embodiment of the present invention is described with reference to FIG. 13. FIG. 13 is a diagram schematically illustrating an entire configuration of the automatic analyzer according to the seventh embodiment.

The configuration of the automatic analyzer 100F according to the present embodiment illustrated in FIG. 13 is substantially the same as that of the automatic analyzer 100E according to the sixth embodiment illustrated in FIG. 12. A stop controller 37F turns on ultraviolet light sources 14a and 14b of a liquid sterilizer 38F periodically at predetermined time intervals or at any time intervals a plurality of times even in the stopped state of the apparatus and the like.

In the automatic analyzer 100F according to the present embodiment, the stop controller 37F performs control to switch at least one of the flow rate of the liquid circulated by the analyzer circulation system and the flow rate of the liquid circulated by the supply unit circulation system between the first flow rate at normal time and the second flow rate different from the first flow rate during the stop of analysis and at time around turning off of a power supply.

In addition, instead of or in addition to the flow rate control, the stop controller 37F performs control to heat the liquid at a temperature higher than that at the time of normal temperature adjustment by the temperature adjusting mechanism 7 at least once when the power supply of the apparatus is turned off, when the apparatus is activated, when analysis is not planned to be performed by the analyzer 20F for a certain time period, and at a predetermined time interval.

Other configurations and operations are substantially the same as those of the automatic analyzer 100E according to the above-described sixth embodiment and a description thereof is omitted.

The automatic analyzer 100F according to the seventh embodiment of the present invention can obtain effects similar to those of the automatic analyzer 100E according to the above-described sixth embodiment and effects specific to the fourth embodiment or effects specific to the second embodiment.

### <Eighth Embodiment>

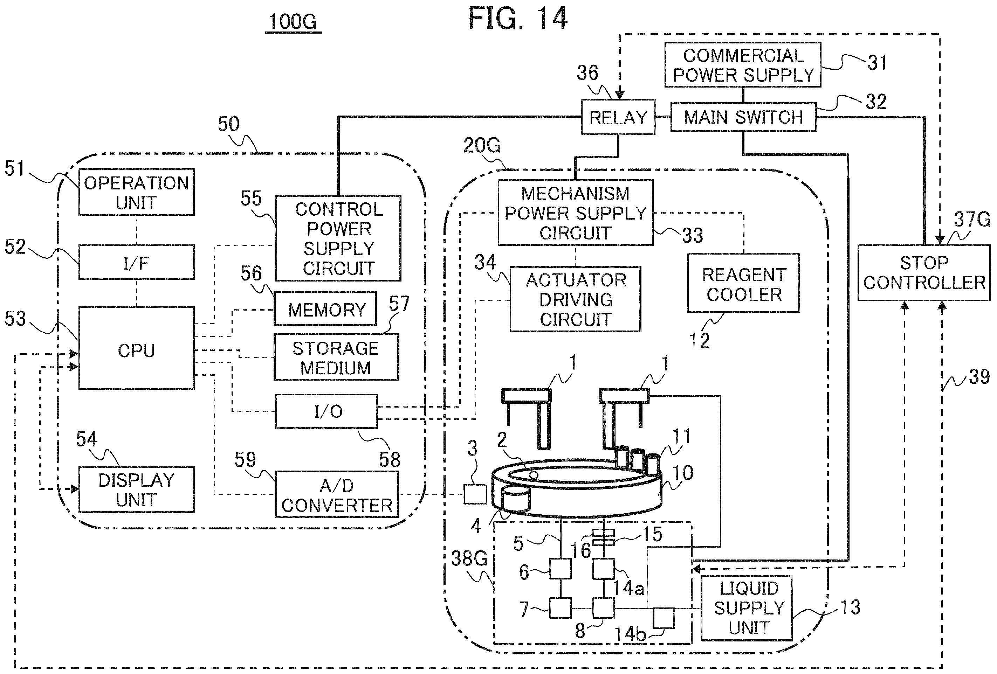

An automatic analyzer according to an eighth embodiment of the present invention is described with reference to FIG. 14. FIG. 14 is a diagram schematically illustrating an entire configuration of the automatic analyzer according to the eighth embodiment.

The automatic analyzer 100G according to the present embodiment illustrated in FIG. 14 is substantially the same as the automatic analyzer 100D according to the fifth embodiment illustrated in FIG. 8.

In the automatic analyzer 100G according to the present embodiment, in a case where the stop controller 37F turns on the ultraviolet light sources 14a and 14b in a liquid sterilizer 38G of an analyzer 20G periodically at predetermined time intervals or at any time intervals a plurality of times in the stopped state of the apparatus and the like, the stop controller 37F performs abnormality notification control based on a detection result of the lighting detection sensor 15 and performs control to block the supply of power to the ultraviolet light sources 14a and 14b. Alternatively or in addition, the stop controller 37F notifies the operator of an abnormality, blocks the supply of power to the ultraviolet light sources 14a and 14b, and performs control to increase or decrease the amount of the liquid based on information of the liquid amount sensor 16. Furthermore, the stop controller 37F controls at least one of intensities of ultraviolet light emitted by the ultraviolet light sources 14a and 14b, the flow rate of the liquid in the analyzer circulation system, and the flow rate of the liquid in the supply unit circulation system.

Other configurations and operations are substantially the same as those of the automatic analyzer 100D according to the above-described fifth embodiment and a description thereof is omitted.

The automatic analyzer 100G according to the eighth embodiment of the present invention can obtain effects similar to those of the automatic analyzer 100E according to the sixth embodiment described above and effects specific to the fifth embodiment.

### <Others>

The embodiments are described in detail to clearly explain the present invention and are not necessarily limited to those having all the configurations described.

In addition, it is possible replace a part of a configuration described in a certain embodiment with a configuration described in another embodiment. Furthermore, it is possible to add a configuration described in a certain embodiment to a configuration described in another embodiment. Furthermore, for a part of the configuration described in each embodiment, addition, removal, and replacement of other configurations are possible.

### List of Reference Signs

1 ... Dispensing mechanism
2 ... Light source
3 ... Photometer
4 ... Stirring mechanism
5 ... Flow path
6 ··· Temperature sensor
7 ··· Temperature adjusting mechanism (temperature adjuster)
8 ... Circulation pump
10 ... Reaction tank (constant-temperature tank)
11 ... Reaction container
12 ... Reagent cooler
13 ... Liquid supply unit
14a, 14b ... Ultraviolet light source
15 ... Lighting detection sensor
16 ... Liquid amount sensor
20, 20A, 20B, 20C, 20D, 20E, 20F, 20G ... Analyzer
31 ... Commercial power supply
32 ··· Main switch
33 ... Mechanism power supply circuit
34 ... Actuator driving circuit
36 ... Relay
37, 37D, 37E, 37F, 37G ... Stop controller
37a ... Stop controller memory
37b ... Controller
38, 38D, 38E, 38F, 38G ... Liquid sterilizer
38a ... Sterilization power supply circuit
39 ... Setting/abnormality information communication path
50, 50A, 50B ... Analysis controller
51 ... Operation unit
52 ... Interface
53, 53A, 53B ... CPU
54 ... Display unit
54a, 54b, 54c ... Alarm information
55 ... Control power supply circuit
56 ··· Memory
57 ... Storage medium
58 ... Input/output port
59 ... A/D converter
100, 100A, 100B, 100C, 100D, 100E, 100F, 100G ... Automatic analyzer

## Claims

1. An automatic analyzer (100; 100A-100G) comprising:
an analyzer (20; 20A-20G) that analyzes a specimen;
a supply unit (13) that stores and supplies a liquid to be used by the analyzer (20; 20A-20G);
an analyzer circulation system (5-8, 10) that circulates the liquid existing in the analyzer (20; 20A-20G) and the supply unit (13); and
a controller (50; 50A; 50B) that controls an operation of the automatic analyzer (100; 100A-100G),
wherein the controller (50; 50A; 50B) switches a flow rate of the liquid circulated by the analyzer circulation system (5-8, 10) between a first flow rate in a normal state and a second flow rate different from the first flow rate,
wherein
the automatic analyzer (100; 100A-100G) further comprises a temperature adjuster (7) that adjusts the temperature of the liquid within the analyzer circulation system (5-8, 10),
the liquid within the analyzer circulation system (5-8, 10) is water, **characterized in that**
the controller (50; 50A; 50B) heats the liquid to a temperature of 75°C or higher and higher than the temperature of the liquid in normal temperature adjustment by the temperature adjuster (7) when a device power supply (31) is turned off, or when the automatic analyzer (100; 100A-100G) is activated, or when the analysis is not planned for a certain time period or longer in the analyzer (20; 20A-20G), or at predetermined time intervals.

2. The automatic analyzer (100B-100G) according to claim 1, further comprising:
an ultraviolet light source (14a, 14b) that emits ultraviolet light to the liquid.

3. The automatic analyzer (100C-100G) according to claim 2, further comprising:
a relay (36) that switches between power supply to the analyzer (20C-20G) and the controller (50) and blocking of the power supply; and
a stop controller (37) that maintains a state in which power is supplied to the ultraviolet light source (14a, 14b) and that switches between a stopped state in which the power supply to the analyzer (20C-20G) and the controller (50) is blocked and an activated state in which power is supplied to the analyzer (20C-20G) and the controller (50).

4. The automatic analyzer (100C-100G) according to claim 3, wherein the ultraviolet light source (14a, 14b) emits the ultraviolet light to the liquid within the analyzer circulation system (5-8, 10).

5. The automatic analyzer (100C-100G) according to claim 2 or 4, wherein the controller (50) turns on the ultraviolet light source (14a, 14b) periodically at predetermined time intervals or turns on the ultraviolet light source (14a, 14b) a plurality of times at arbitrary time intervals.

6. The automatic analyzer (100D; 100G) according to claim 5, further comprising:
a lighting detection sensor (15) that detects an abnormality of the ultraviolet light source (14a, 14b).

7. The automatic analyzer (100D; 100G) according to claim 6, wherein the controller (50) notifies an abnormality to a user of the automatic analyzer (100D; 100G) based on information of the lighting detection sensor (15).

8. The automatic analyzer (100D; 100G) according to claim 6, wherein the controller (50) blocks power supply to the ultraviolet light source (14a, 14b) based on the information of the lighting detection sensor (15).

9. The automatic analyzer (100D; 100G) according to claim 2 or 4, further comprising:
a liquid amount sensor (16) that detects the amount of the liquid within the analyzer circulation system (5-8, 10).

10. The automatic analyzer (100D; 100G) according to claim 9, wherein the controller (50) notifies an abnormality to a user of the automatic analyzer (100D; 100G) based on information of the liquid amount sensor (16), blocks power supply to the ultraviolet light source (14a, 14b), and increases or reduces the amount of the liquid.

11. The automatic analyzer (100B-100G) according to claim 2 or 4, further comprising:
a temperature sensor (6) that measures the temperature of the liquid within the analyzer circulation system (5-8, 10),
wherein the controller (50; 50B) controls at least any of the intensity of ultraviolet light emitted by the ultraviolet light source (14a, 14b) and the flow rate of the liquid within the analyzer circulation system (5-8, 10) based on information of the temperature, measured by the temperature sensor (6), of the liquid.

## Patentansprüche

1. Automatischer Analysator (100; 100A-100G) umfassend:
ein Analysegerät (20; 20A-20G), das eine Probe analysiert;
eine Versorgungseinheit (13), die eine vom Analysegerät (20; 20A-20G) zu verwendende Flüssigkeit speichert und liefert;
ein Analysator-Umlaufsystem (5-8, 10), das die im Analysegerät (20; 20A-20G) und in der Versorgungseinheit (13) vorhandene Flüssigkeit zirkuliert; und
eine Steuerung (50; 50A; 50B), die den Betrieb des automatischen Analysators (100; 100A-100G) steuert,
wobei die Steuerung (50; 50A; 50B) eine Durchflussrate der durch das Analysator-Umlaufsystem (5-8, 10) zirkulierenden Flüssigkeit zwischen einer ersten Durchflussrate in einem normalen Zustand und einer zweiten Durchflussrate umschaltet, die von der ersten Durchflussrate verschieden ist,
wobei
der automatische Analysator (100; 100A-100G) ferner einen Temperaturregler (7) umfasst, der die Temperatur der Flüssigkeit im Analysator-Umlaufsystem (5-8, 10) regelt,
die Flüssigkeit im Analysator-Umlaufsystem (5-8, 10) Wasser ist,
**dadurch gekennzeichnet, dass**
die Steuerung (50; 50A; 50B) die Flüssigkeit auf eine Temperatur von 75°C oder höher und höher als die Temperatur der Flüssigkeit bei normaler Temperatureinstellung durch den Temperaturregler (7) erhitzt, wenn eine Stromversorgung (31) der Vorrichtung ausgeschaltet wird oder wenn der automatische Analysator (100; 100A-100G) aktiviert wird oder wenn die Analyse im Analysegerät (20; 20A-20G) für eine bestimmte Zeitspanne oder länger nicht geplant ist, oder in vorbestimmten Zeitintervallen.

2. Automatischer Analysator (100B-100G) nach Anspruch 1, umfassend:
eine ultraviolette Lichtquelle (14a, 14b), die ultraviolettes Licht an die Flüssigkeit abgibt.

3. Automatischer Analysator (100C-100G) nach Anspruch 2, umfassend:
ein Relais (36), das zwischen der Stromversorgung des Analysegeräts (20C-20G) und der Steuerung (50) und der Sperrung der Stromversorgung umschaltet; und
eine Stoppsteuerung (37), die einen Zustand aufrechterhält, in dem die ultraviolette Lichtquelle (14a, 14b) mit Strom versorgt wird, und die zwischen einem gestoppten Zustand, in dem die Stromversorgung des Analysegeräts (20C-20G) und der Steuerung (50) blockiert ist, und einem aktivierten Zustand umschaltet, in dem das Analysegerät (20C-20G) und die Steuerung (50) mit Strom versorgt werden.

4. Automatischer Analysator (100C-100G) nach Anspruch 3, wobei die Ultraviolettlichtquelle (14a, 14b) das Ultraviolettlicht auf die Flüssigkeit im Analysator-Umlaufsystem (5-8, 10) abgibt.

5. Automatischer Analysator (100C-100G) nach Anspruch 2 oder 4, wobei die Steuerung (50) die Ultraviolettlichtquelle (14a, 14b) periodisch in vorbestimmten Zeitintervallen oder die Ultraviolettlichtquelle (14a, 14b) mehrmals in beliebigen Zeitintervallen einschaltet.

6. Automatischer Analysator (100D; 100G) nach Anspruch 5, umfassend:
einen Beleuchtungserfassungssensor (15), der eine Anomalie der ultravioletten Lichtquelle (14a, 14b) detektiert.

7. Automatischer Analysator (100D; 100G) nach Anspruch 6, wobei die Steuerung (50) einen Benutzer des automatischen Analysators (1000; 100G) auf der Grundlage von Informationen des Beleuchtungserfassungssensors (15) über eine Anomalie informiert.

8. Automatischer Analysator (100D; 100G) nach Anspruch 6, wobei die Steuerung (50) die Stromversorgung der ultravioletten Lichtquelle (14a, 14b) auf der Grundlage der Informationen des Beleuchtungserfassungssensors (15) sperrt.

9. Automatischer Analysator (100D; 100G) nach Anspruch 2 oder 4, der ferner folgendes umfasst:
einen Flüssigkeitsmengensensor (16), der die Flüssigkeitsmenge im Analysator-Umlaufsystem (5-8, 10) erfasst.

10. Automatischer Analysator (1000; 100G) nach Anspruch 9, wobei die Steuerung (50) einem Benutzer des automatischen Analysators (1000; 100G) auf der Grundlage von Informationen des Flüssigkeitsmengensensors (16) eine Anomalie meldet, die Stromversorgung der Ultraviolettlichtquelle (14a, 14b) blockiert und die Flüssigkeitsmenge erhöht oder reduziert.

11. Automatischer Analysator (100B-100G) nach Anspruch 2 oder 4, der ferner folgendes umfasst:
einen Temperatursensor (6), der die Temperatur der Flüssigkeit im Analysator-Umlaufsystem (5-8, 10) misst,
wobei die Steuerung (50; 50B) mindestens eines von der Intensität des von der Ultraviolettlichtquelle (14a, 14b) emittierten ultravioletten Lichts und der Durchflussrate der Flüssigkeit innerhalb des Analysator-Umlaufsystems (5-8, 10) auf der Grundlage von Informationen über die von dem Temperatursensor (6) gemessene Temperatur der Flüssigkeit steuert.

## Revendications

1. Analyseur automatique (100; 100A-100G) comprenant :
un analyseur (20 ; 20A-20G) qui analyse un échantillon ;
une unité (13) d'alimentation qui stocke et alimente un liquide à utiliser par l'analyseur (20 ; 20A-20G) ;
un système (5-8, 10) de circulation d'analyseur qui fait circuler le liquide existant dans l'analyseur (20 ; 20A-20G) et l'unité (13) d'alimentation ; et
un contrôleur (50 ; 50A ; 50B) qui commande une opération de l'analyseur automatique (100; 100A-100G),
dans lequel le contrôleur (50 ; 50A ; 50B) commute un débit du liquide mis en circulation par le système (5-8, 10) de circulation d'analyseur entre un premier débit dans un état normal et un deuxième débit différent du premier débit,
dans lequel l'analyseur automatique (100; 100A-100G) comprend en outre un régulateur (7) de température qui ajuste la température du liquide à l'intérieur du système (5-8, 10) de circulation d'analyseur,
le liquide à l'intérieur du système (5-8, 10) de circulation d'analyseur est de l'eau,
**caractérisé en ce que**
le contrôleur (50 ; 50A ; 50B) chauffe le liquide à une température de 75°C ou plus et plus que la température du liquide lors d'un ajustement de température normal par le régulateur (7) de température lorsqu'une alimentation électrique (31) de dispositif est coupée, ou lorsque l'analyseur automatique (100; 100A-100G) est activé, ou lorsque l'analyse n'est pas planifiée pour une certaine période de temps ou plus dans l'analyseur (20 ; 20A-20G), ou à intervalles de temps prédéterminés.

2. Analyseur automatique (100B-100G) selon la revendication 1, comprenant en outre :
une source (14a, 14b) de lumière ultraviolette qui émet une lumière ultraviolette sur le liquide.

3. Analyseur automatique (100C-100G) selon la revendication 2, comprenant en outre :
un relais (36) qui commute entre l'alimentation électrique de l'analyseur (20C-20G) et du contrôleur (50) et le blocage de l'alimentation électrique ; et
un contrôleur (37) d'arrêt qui maintient un état dans lequel une alimentation est fournie à la source (14a, 14b) de lumière ultraviolette et qui commute entre un état arrêté dans lequel l'alimentation électrique de l'analyseur (20C-20G) et du contrôleur (50) est bloquée et un état activé dans lequel une alimentation est fournie à l'analyseur (20C-20G) et au contrôleur (50).

4. Analyseur automatique (100C-100G) selon la revendication 3, dans lequel la source (14a, 14b) de lumière ultraviolette émet la lumière ultraviolette sur le liquide à l'intérieur du système (5-8, 10) de circulation d'analyseur.

5. Analyseur automatique (100C-100G) selon la revendication 2 ou 4, dans lequel le contrôleur (50) active la source (14a, 14b) de lumière ultraviolette périodiquement à intervalles de temps prédéterminés ou active la source (14a, 14b) de lumière ultraviolette une pluralité de fois à intervalles de temps arbitraires.

6. Analyseur automatique (100D ; 100G) selon la revendication 5, comprenant en outre :
un capteur (15) de détection d'éclairage qui détecte une anomalie de la source (14a, 14b) de lumière ultraviolette.

7. Analyseur automatique (100D ; 100G) selon la revendication 6, dans lequel le contrôleur (50) notifie une anomalie à un utilisateur de l'analyseur automatique (100D ; 100G) sur la base d'informations du capteur (15) de détection d'éclairage.

8. Analyseur automatique (100D ; 100G) selon la revendication 6, dans lequel le contrôleur (50) bloque l'alimentation électrique de la source (14a, 14b) de lumière ultraviolette sur la base des informations du capteur (15) de détection d'éclairage.

9. Analyseur automatique (100D ; 100G) selon la revendication 2 ou 4, comprenant en outre :
un capteur (16) de quantité de liquide qui détecte la quantité du liquide à l'intérieur du système (5-8, 10) de circulation d'analyseur.

10. Analyseur automatique (100D ; 100G) selon la revendication 9, dans lequel le contrôleur (50) notifie une anomalie à un utilisateur de l'analyseur automatique (100D ; 100G) sur la base d'informations du capteur (16) de quantité de liquide, bloque l'alimentation électrique de la source (14a, 14b) de lumière ultraviolette, et augmente ou réduit la quantité de liquide.

11. Analyseur automatique (100B-100G) selon la revendication 2 ou 4, comprenant en outre :
un capteur (6) de température qui mesure la température du liquide à l'intérieur du système (5-8, 10) de circulation d'analyseur,
dans lequel le contrôleur (50 ; 50B) commande au moins l'un(e) quelconque de l'intensité de la lumière ultraviolette émise par la source (14a, 14b) de lumière ultraviolette et le débit du liquide à l'intérieur du système (5-8, 10) de circulation d'analyseur sur la base d'informations de la température, mesurée par le capteur (6) de température, du liquide.
